# EUROPEAN PATENT APPLICATION

(11) **EP 1 681 875 A1**
(43) Date of publication of application: **19.07.2006**
(21) Application number: 04792920.3
(22) Date of filing: 25.10.2004
(51) Int. Cl.: H04N 7/32

(54) **VIDEO TRANSMITTING APPARATUS AND VIDEO RECEIVING APPARATUS**

(30) Priority: 04.11.2003 JP 2003374559
(71) Applicant: MATSUSHITA ELECTRIC INDUSTRIAL CO., LTD., Kadoma-shi, Osaka 571-8501 (JP)
(72) Inventor: HONDA, Yoshimasa c/o Mat.Elec.Ind.Co., Ltd., Osaka 540-6319 (JP); ICHIMURA, Daijiro c/o Mat.Elec.Ind.Co., Ltd., Osaka 540-6319 (JP)
(74) Representative: Grünecker, Kinkeldey, Stockmair & Schwanhäusser Anwaltssozietät
(86) International application number: PCT/JP2004/015789
(87) International publication number: WO 2005/043922

(57) **Abstract**

A video transmitting apparatus that is able to efficiently transmit and decode only the video data of the region of interest without lowering coding efficiency, and that is able to change the region of interest during reproduction of video. In this apparatus, a base layer coding section (116) codes the base layer of low resolution obtained by reducing input video of high resolution. A region map calculating section (118) calculates a region map indicating the divided region upon coding, and an enhancement layer coding section (120) performs intra-frame coding for each divided region after dividing the enhancement layer which is differential video of the input video and video obtained by decoding the base layer coded video and expanding the same to the resolution of the input video according to the region map. Here, an offset table generating section (122) generates an offset table indicating the storing position of the coded enhancement layer for each divided region, and a video data clipping section (136) clips the video data corresponding to the region of interest only from the enhancement layer using the offset table.

## Description

### Technical Field

The present invention relates to a video transmitting apparatus and video receiving apparatus that uses a layered coding scheme.

### Background Art

Conventionally, video data transmitted by a video transmitting apparatus that codes and delivers videos is normally compression-coded to less than or equal to a certain band by the JPEG (Joint Video Experts Group) scheme, H.261 scheme, MPEG (Moving Picture Experts Group) scheme and so forth, so as to be transmitted in a certain transmission band, and the quality of video such as resolution or frame rate of video data that has once been coded cannot be changed even if the transmission band changes.

In recent years, since video coded video data is made to have higher resolution and the amount of video data and processing load have increased with increase in the number of imaging pixels of the camera, that is, with higher resolution of videos, problems accompanying higher resolution such as increase in the transmission band necessary for transmitting video data and increased processing load necessary for decoding video data and the like arise. Therefore, when the transmission band or processing performance at the terminal that receives video data is limited, it becomes difficult to receive and decode video data of high resolution in real time. That is, to transmit high resolution video, the required transmission band and the amount of decoding processing are large and delay is likely to occur.

In this case, in order to reduce the transmission band or the amount of decoding processing of video data, it is effective to transmit the video data of only the region of interest required by the terminal and use the same for decoding, instead rather than transmitting and decoding the entire video of high resolution.

Thus, to extract only the video data of the region of interest from video data and use the same for decoding, heretofore, for example as shown in Patent Document 1, video data is divided into small regions and coded, and the video data of the region of interest is extracted and decoded from the coded video data.

In this case, with the coding apparatus of Patent Document 1, input video is divided into small regions made up of a plurality of blocks and coded, and the amount of codes for each small region is stored. Further, the video data corresponding to the region of interest that is specified using the amount of codes is extracted and decoded in the decoding apparatus.
Patent Document 1: Japanese Patent Application Laid-Open No. HEI4-95471

### Disclosure of Invention

### Problems to be Solved by the Invention

However, with conventional coding apparatus, video is divided into small regions and coded. As a result, the problem arises that the number of headers necessary for decoding the small regions increases and coding efficiency lowers with increase in the amount of codes necessary for the headers. In the layered coding scheme referred to as MPEG-4 FGS (Fine Granularity Scalability) (ISO/IEC 14496-2 Amendment 2), in particular, the lowering of coding efficiency by the header is greater than usual MPEG since a header must be attached for every bit plane.

Further, since video coding schemes such as MPEG employ inter-frame prediction coding for decoding the current frame using past frame, the frame of after decoding only the video of the region of interest can only be performed with prediction coding limited to the region of interest, and it becomes impossible to change the region of interest to a different region during reproduction of video.

It is therefore an object of the present invention to provide a video transmitting apparatus and video receiving apparatus that are capable of efficiently transmitting and decoding only the video data of the region of interest without lowering coding efficiency and that are capable of changing the region of interest during reproduction of video.

### Means for Solving the Problem

The video transmitting apparatus of the present invention is a video transmitting apparatus for layered-coding and transmitting input video as a video stream of a base layer and an enhancement layer, and this video transmitting apparatus adopts a configuration having: a first coding section that codes the base layer; a calculating section that calculates divided regions in coding the enhancement layer; and a second coding section that performs intra-frame coding on the enhancement layer for each calculated divided region.

The video receiving apparatus of the present invention is a video receiving apparatus for receiving a video stream transmitted from the above-described video transmitting apparatus and this video receiving apparatus adopts a configuration having: a first receiving section that receives a coded base layer; a first decoding section that decodes the received coded base layer; a second receiving section that receives a coded enhancement layer; a second decoding section that decodes the received coded enhancement layer; a first synthesis section that synthesizes the decoded base layer and the decoded enhancement layer; and a display section that displays the synthesis result of the first synthesis section.

### Advantageous Effect of the Invention

As explained above, according to the present invention, only the video data of the region of interest is efficiently transmitted and decoded without lowering the coding efficiency, and the region of interest can be changed during reproduction of video.

### Brief Description of Drawings

FIG. 1 is a diagram showing a configuration of a video transmitting system including a video transmitting apparatus and a video receiving apparatus according to a first embodiment of the present invention;
FIG. 2 is a flow chart illustrating the operation of video coding section of the video transmitting apparatus corresponding to the first embodiment;
FIG. 3A is a diagram showing an example of input video in working example 1;
FIG. 3B is a diagram showing an example of a corresponding region map;
FIG. 4A is a diagram showing an example of input video in working example 2;
FIG. 4B is a diagram showing an example of a corresponding region map;
FIG. 5A is a diagram showing an example of input video in working example 3;
FIG. 5B is a diagram showing an example of a corresponding region map;
FIG. 6A is a diagram showing an example of input video in working example 4;
FIG. 6B is a diagram showing an example of a corresponding region map;
FIG. 7 is a flow chart illustrating the content of an enhancement layer coding processing shown in FIG. 2;
FIG. 8A is a diagram showing an example of the region map;
FIG. 8B is a diagram showing an example of a corresponding offset table;
FIG. 9 is a flow chart illustrating the operation of a video delivering section of the video transmitting apparatus corresponding to the first embodiment;
FIG. 10 is a flow chart illustrating the operation of the video receiving apparatus corresponding to the first embodiment;
FIG. 11 is a diagram showing an example of a video synthesis result;
FIG. 12 is a diagram showing a configuration of a video transmitting system including a video transmitting apparatus and a video receiving apparatus according to a second embodiment of the present invention;
FIG. 13 is a flow chart illustrating the operation of the video delivering section of the video transmitting apparatus corresponding to the second embodiment;
FIG. 14A is a diagram showing an example of a region map;
FIG. 14B is a diagram showing the numbers of clipped small regions;
FIG. 14C is a diagram showing an example of a corresponding decode map;
FIG. 15 is a flow chart illustrating the operation of the video receiving apparatus corresponding to the second embodiment;
FIG. 16A is a diagram showing an example of a decode map; and
FIG. 16B is a diagram showing an example of an expanded decode map.

### Best Mode for Carrying Out the Invention

Features of the present invention include coding the base layer of layered coded data, calculating divided regions (region map) in coding an enhancement layer and performing intra-frame coding on the enhancement layer for each divided region. Features of the present invention also include generating information (offset table) related to the storing position of the coded enhancement layer for each calculated divided region and extracting and transmitting the video data of the region of interest from the coded enhancement layer using the generated storing position information.

Features of the present invention further include transmitting the information (region map) related to the divided regions to the receiving side, synthesizing the divided region information and the decoded base layer, and displaying the result on the screen at the receiving side.

In addition, features of the present invention include generating and transmitting to the receiving side decoding region information (decode map) indicating the region that requires decoding to decode the coded enhancement layer in the coded base layer, and decoding only the video data indicated in the decoding region information out of the video data of the base layer at the receiving side.

Embodiments of the present invention will now be described with reference to the accompanying drawings.

### (First embodiment)

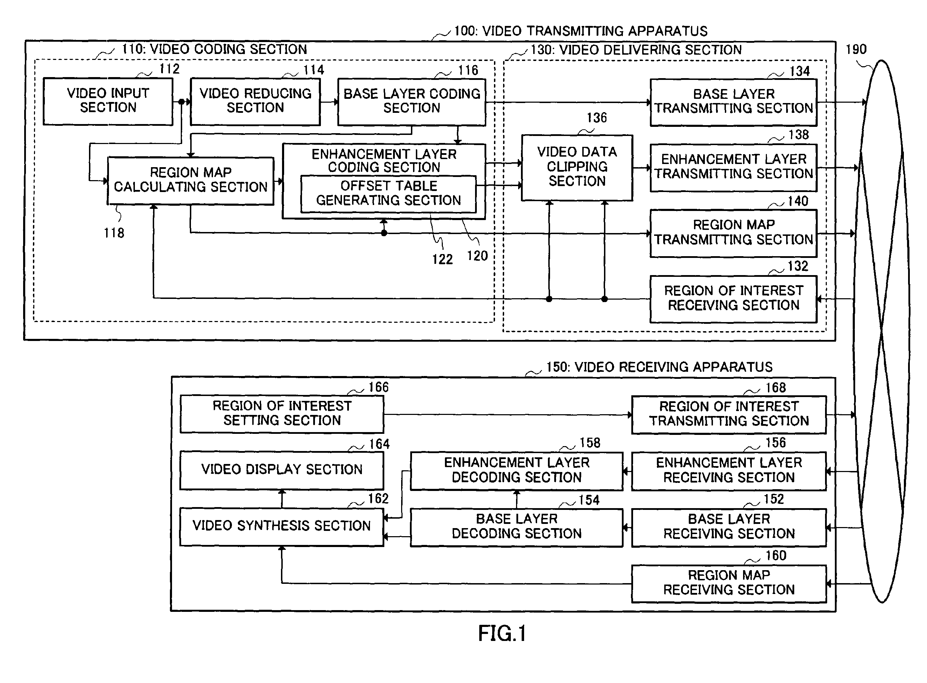

FIG. 1 is a diagram showing a configuration of a video transmitting system including a video transmitting apparatus and a video receiving apparatus according to a first embodiment of the present invention.

The video transmitting system shown in FIG. 1 is a system for coding and delivering video of high resolution and includes a video transmitting apparatus (hereinafter also referred to as "transmitting terminal") 100 for transmitting video, a video receiving apparatus (hereinafter also referred to as "receiving terminal") 150 for receiving video, and a network 190 for relaying video transmitted from video transmitting apparatus 100 to video receiving apparatus 150. The video receiving apparatus 100 has, chiefly, a video coding section 110 for coding video, and a video delivering section 130 for extracting and delivering the video data of the region of interest (ROI) according to the request of the user. Video receiving apparatus 150 has a function of receiving, decoding and displaying video data. That is, video transmitted from video transmitting apparatus 100 -- to be more specific, video coded at video coding section 110 and transmitted from video delivering section 130 -- is transmitted to video receiving apparatus 150 via network 190.

Video coding section 110 includes a video input section 112, a video reducing section 114, a base layer coding section 116, a region map calculating section 118, and an enhancement layer coding section 120. Enhancement layer coding section 120 includes an offset table generating section 122. Video delivering section 130 includes a region of interest receiving section 132, a base layer transmitting section 134, a video data clipping section 136, an enhancement layer transmitting section 138, and a region map transmitting section 140.

Video receiving apparatus 150 includes a base layer receiving section 152, a base layer decoding section 154, an enhancement layer receiving section 156, an enhancement layer decoding section 158, a region map receiving section 160, a video synthesis section 162, a video display section 164, a region of interest setting section 166, and a region of interest transmitting section 168.

In the present embodiment, MPEG-4 FGS, one scheme of layered coding schemes, is used as a compression coding scheme for input video (high resolution video). Video data coded through MPEG-4 FGS is configured by one base layer which is a moving image stream that is MPEG-4 coded and can be decoded alone, and at least one or more enhancement layer which is a moving image stream for enhancing the quality of the decoded moving image of the base layer. Although the base layer is video data having low quality at low band, higher quality having high degree of freedom becomes possible by adding the enhancement layer according to the band.

The compression coding scheme is not limited to MPEG-4 FGS and any method is available as long as it is a layered coding scheme. The coded video data is configured by the base layer and the enhancement layer in the layered coding scheme.

Each component of video transmitting apparatus 100 will now be explained.

Video input section 112 receives as input a video signal and outputs the same to video reducing section 114 and regionmap calculating section 118 foreveryframe.

Video reducing section 114 reduces the video output from video input section 112 at a reduction ratio specified in advance, and outputs the obtained reduced video (base layer) to base layer coding section 116. Specifically, if the reduction ratio is N and the resolution of input video is (width, height) = (W, H), video output from video input section 112 is reduced to the resolution of (W/N, H/N).

Base layer coding section 116 compression-codes the video (base layer) output from video reducing section 114, and outputs the coded video data to base layer transmitting section 134, and further outputs a motion vector calculated upon coding to region map calculating section 118. Base layer coding section 116 decodes the coded video data, and outputs the obtained base layer decoded video to enhancement layer coding section 120. The motion vector has a value for every macro-block (16 × 16 pixels).

Region map calculating section 118 calculates a region map indicating the region to divide upon coding using the input video output from video input section 112 and the motion vector output from base layer coding section 116, by way of example, and outputs the obtained region map to enhancement layer coding section 120, video data clipping section 136, and region map transmitting section 140. Region map calculating section 118 further outputs the input video output from video input section 112 to enhancement layer coding section 120. Various methods for calculating the region map are contrived other than the method using input video and motion vector. The method of calculating the region map will be explained later in detail.

After enhancing the base layer decoded video output frombase layer coding section 116 to the resolution of the input video, enhancement layer coding section 120 determines the difference with the input video, generates a differential video (enhancement layer), divides the differential video according to the region map output from region map calculating section 118 and performs enhancement layer coding for every small region, and outputs the coded video data to video data clipping section 136. Enhancement layer coding section 120 generates the offset table indicating the storing position of the coded video data for every region in the offset table generating part 122, and outputs the obtained offset table to video data clipping section 136. The details of the process will be hereinafter described.

Region of interest receiving section 132 receives region of interest information transmitted from video receiving apparatus 150, and outputs the same to video data clipping section 136 and region map calculating section 118.

Base layer transmitting section 134 transmits video data output from base layer coding section 116 to video receiving apparatus 150 via network 190.

Video data clipping section 136 extracts video data corresponding to the region of interest output from region of interest receiving section 132 from the video data output from enhancement layer coding section 120 using the region map output from region map calculating section 118 and the offset table output from enhancement layer coding section 120, and outputs the extracted video data to enhancement layer transmitting section 138. The details of the process will be hereinafter described.

Enhancement layer transmitting section 138 transmits the video data output from video data clipping section 136 to video receiving apparatus 150 via network 190.

Region map transmitting section 140 transmits the region map output from region map calculating section 118 to video receiving apparatus 150 via network 190.

Each component of video receiving apparatus 150 will now be explained.

Base layer receiving section 152 receives the video data of the base layer from network 190 and outputs the same to base layer decoding section 154.

Base layer decoding section 154 decodes the video data of base layer output frombase layer receiving section 152, and outputs the obtained decoded video to enhancement layer decoding section 158 and video synthesis section 162.

Enhancement layer receiving section 156 receives the video data of the enhancement layer from network 190 and outputs the same to enhancement layer decoding section 158.

Enhancement layer decoding section 158 decodes the video data output from enhancement layer receiving section 156, enhances the decoded video of the base layer output from base layer decoding section 154 and performs addition processing at the same resolution, clips the decoded video of the region where the enhancement layer is present, and outputs the clipped decoded video to video synthesis section 162. The details of the process will be hereinafter described.

Region map receiving section 160 receives the region map from network 190 and outputs the same to video synthesis section 162.

Video synthesis section 162 overwrites the region map output from region map receiving section 160 on the base layer decoded image output from base layer decoding section 154, synthesizes the enhancement layer decoded image output from enhancement layer decoding section 158, and outputs the synthesized video to video display section 164.

Video display section 164 displays the synthesized video output from video synthesis section 162.

Region of interest setting section 166 sets the region of interest to be clipped and displayed on the screen through the selection of the user, and outputs the set region of interest region information to region of interest transmitting section 168. Specifically, for example, region of interest setting section 166 calculates the coordinate (x, y) on the upper left of the region of interest and the combination of width and height (w, h) of the region of interest as region of interest information, and outputs the obtained region of interest information (x, y), (w, h) to region of interest transmitting section 168.

In the present embodiment, the region of interest information is (x, y), (w, h), but is not limited thereto, and may take any form as long as the region can be expressed.

Region of interest transmitting section 168 transmits the region of interest information output from region of interest setting section 166 to video transmitting apparatus 100 via network 190.

In the present embodiment, according to the above configuration, the base layer of low resolution obtained by reducing the input video of high resolution is coded, and after dividing the differential video between the input video and the video obtained by enhancing the base layer coded video to the resolution of the input video after decoding according to the region map, intra-frame coding is performed for every divided region as the enhancement layer. Here, the offset table indicating the storing position of the coded enhancement layer for every divided region is generated, and the video data corresponding to the region of interest is clipped only from the enhancement layer using the offset table.

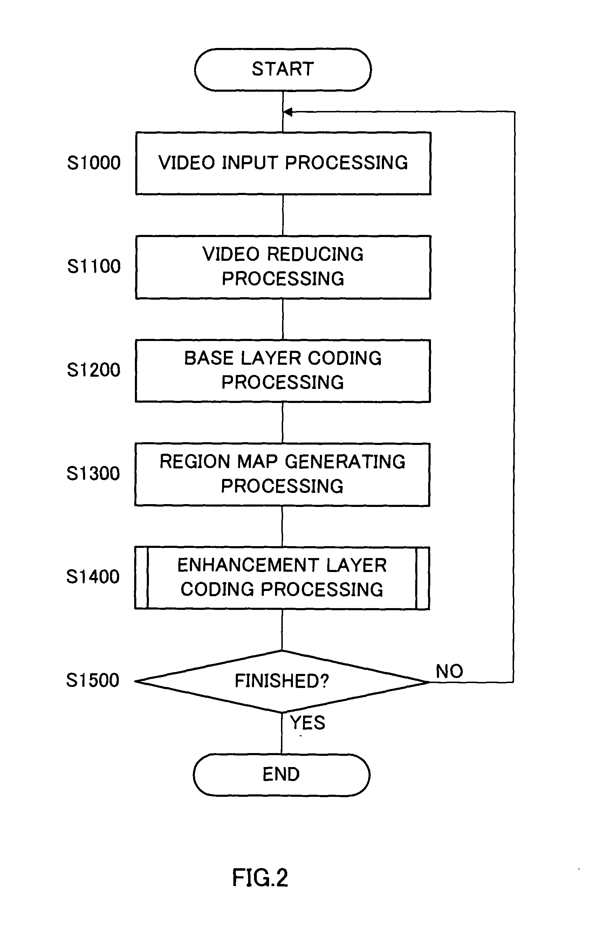

The operation of video transmitting apparatus 100 having the above configuration -- in particular, the operation of video coding section 110 -- will now be explained using the flow chart shown in FIG. 2. The flow chart shown in FIG. 2 is stored in a storage apparatus (e.g., ROM, flash memory, etc.) (not shown) of video transmitting apparatus 100 as control program, and is executed by a CPU (not shown).

First, in step S1000, video input processing is performed. Specifically, the video signal is input to video input section 112 and output to video reducing section 114 and region map calculating section 118 for every frame.

In step S1100, input video reducing processing is performed. Specifically, the video output from video input section 112 is reduced at a reduction ratio specified in advance in video reducing section 114, and the obtained, reduced video is output to base layer coding section 116. For instance, if the reduction ratio is N and the resolution of the input video is (width, height) = (W, H), the input video is reduced to the resolution of (W/N, H/N).

In S1200, the base layer coding processing is performed. Specifically, the video (base layer) output from video reducing section 114 is compression-coded in base layer coding section 116, and the coded video data is output to base layer transmitting section 134, and the motion vector calculated upon coding is output to region map calculating section 118. Further, the coded video data is decoded, and the obtained base layer decoded video is output to enhancement layer coding section 120. The motion vector includes a value for every macro-block (16 × 16 pixels), as described above.

In step S1300, the region map calculating processing is performed to calculate the region map indicating the divided region when coding the enhancement layer is performed. Specifically, region map calculating section 118, for example, calculates the region map using the input video output from video input section 112, motion vector output from base layer coding section 116, and the region of interest information output from region of interest receiving section 132, and outputs the obtained region map to enhancement layer coding section 120 and region map transmitting section 140. The input video is also output to enhancement layer coding section 120.

The method of calculating the region map will now be explained using some working examples.

### (Working example 1)

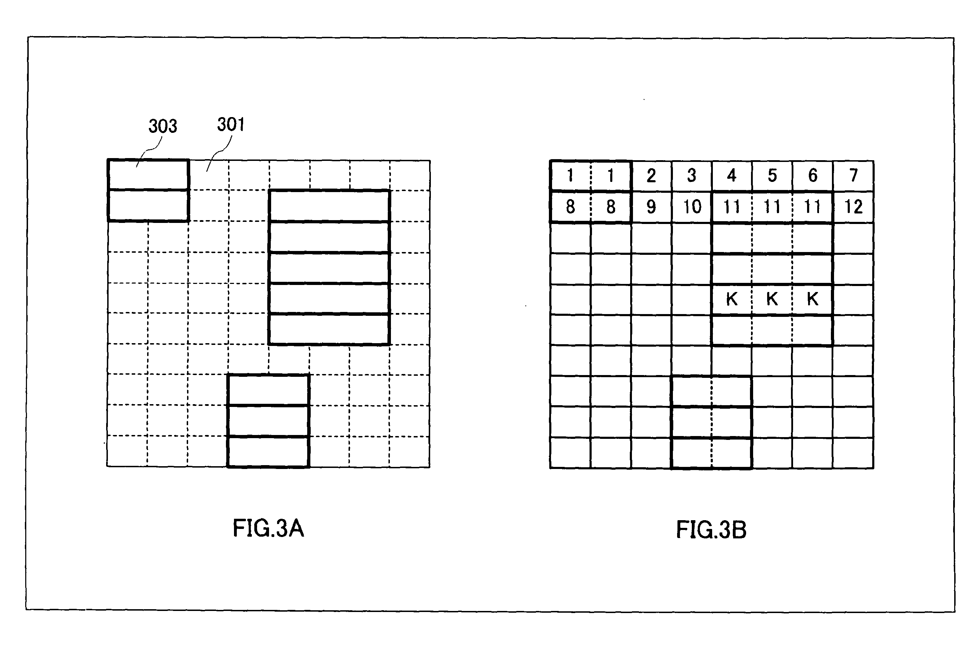

In working example 1, region map calculating section 118 calculates a region map using the motion vector output from base layer coding section 116. Specifically, for example, a plurality of macro-blocks having the same motion vector or having a difference less than or equal to the threshold value are considered as the same small regions. That is, the regions having the same or similar motion vector are considered as the same small regions. FIG. 3A is a diagram showing an example of the input video, and FIG. 3B is a view of an example of the region map calculated in the present working example with respect to the input video of FIG. 3A. In FIG. 3A, 301 is a macro-block, and 303 is a small region calculated by the motion vector. In the region other than the small region 303, each macro-block becomes the small region. As shown in FIG. 3B, a small region number is added to each macro-block.

In the present embodiment, a case of using MPEG-4 FGS as an enhancement layer coding scheme will be presented by way of example. Therefore, the small region is the unit of coding and is referred to as a "video packet," configured by a plurality of macro-blocks continuing in the horizontal direction, and thus becomes the same small region (i.e., video packet) when the value of the motion vector is the same or close in the macro-block continuing in the horizontal direction.

Therefore, by making regions with the same or similar motion vectors as the same region, the moving object that is most likely to become the region of interest can be divided as the same region, thereby eliminating unnecessary division, and preventing lowering of coding efficiency caused by unnecessary division.

The coding scheme is not limited to MPEG-4 FGS, and the shape of the small region is not limited to the macro-blocks continuing in the horizontal direction. Further, with regards to the size of small regions other than the small region calculated using the motion vector, one macro-block is not limited to be one small region and a predetermined number of macro-blocks may form a small region.

### (Working example 2)

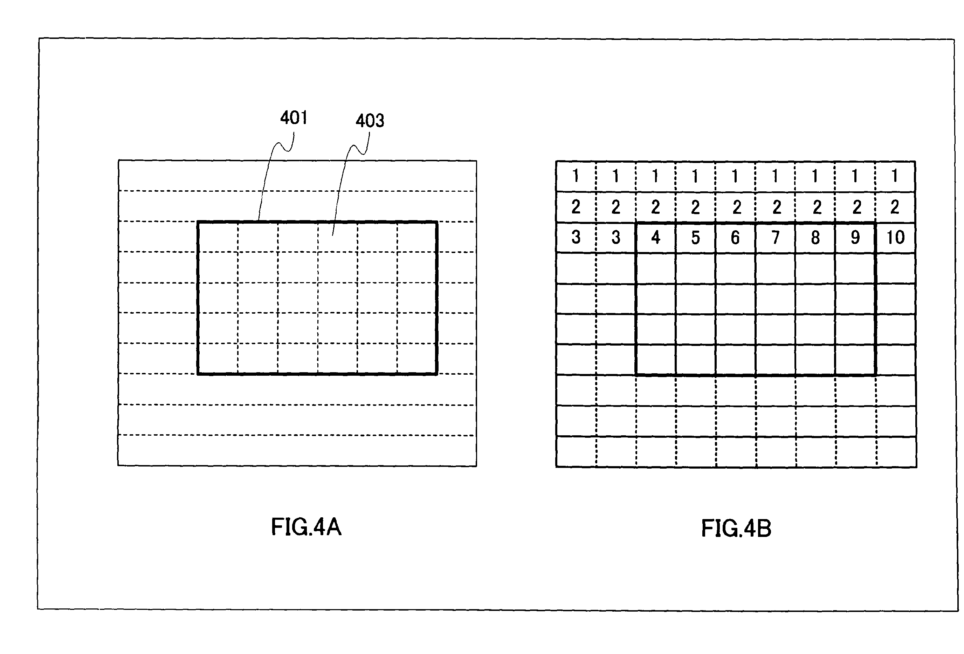

In working example 2, region map calculating section 118 calculates the region map by dividing only the specific region in video into finer regions. Specifically, for instance, in the case of remote monitoring using video, the area set in advance such as the important area (e.g., near the door or near the cash register of a shop) in the monitoring region and the area (surrounding region) in the vicinity thereof are divided into fine regions. FIG. 4A is a diagram showing an example of the input video, and FIG. 4B is a diagram showing an example of a region map calculated in the present working example with respect to the input video of FIG. 4A. In FIG. 4A, 401 is an important area and the surrounding region thereof, and 403 is the small region finely divided from the important area and the surrounding region thereof. Regions other than the important area and the surrounding region thereof 403, regions continuing in the horizontal direction are each a small region. As shown in FIG. 4B, a small region number is assigned to every macro-block.

Therefore, by finely dividing only the area set in advance, lowering of coding efficiency caused by unnecessary division is prevented without losing selectivity of the region in the area (important monitoring region) likely to be subject of interest.

The region map can be calculated by dividing only the central part of the screen, which is the region where the object is likely to be imaged, into fine regions. Thus, lowering of coding efficiency caused by unnecessary division is prevented without losing selectivity of the region in the area where subject is likely to be imaged such as near the center in the video.

### (Working example 3)

In working example 3, region map calculating section 118 performs object detection using input video output from video input section 112, performs region division using detection results, and calculates the region map. Specifically, the region map is calculated so that the size of each divided region becomes equal to the detection result of the object using the detection result of the object. In other words, the section of the region division is matched to the person or the moving object using the detection of the person or the moving object. For instance, detection of the face image from the input video using image processing such as ellipse detection and the like is performed, and the entire screen is equally divided using the size of the detected region. For instance, when the width of detection region is worth M number of macro-blocks, the M number of macro-blocks continuing in the horizontal direction becomes one small region.

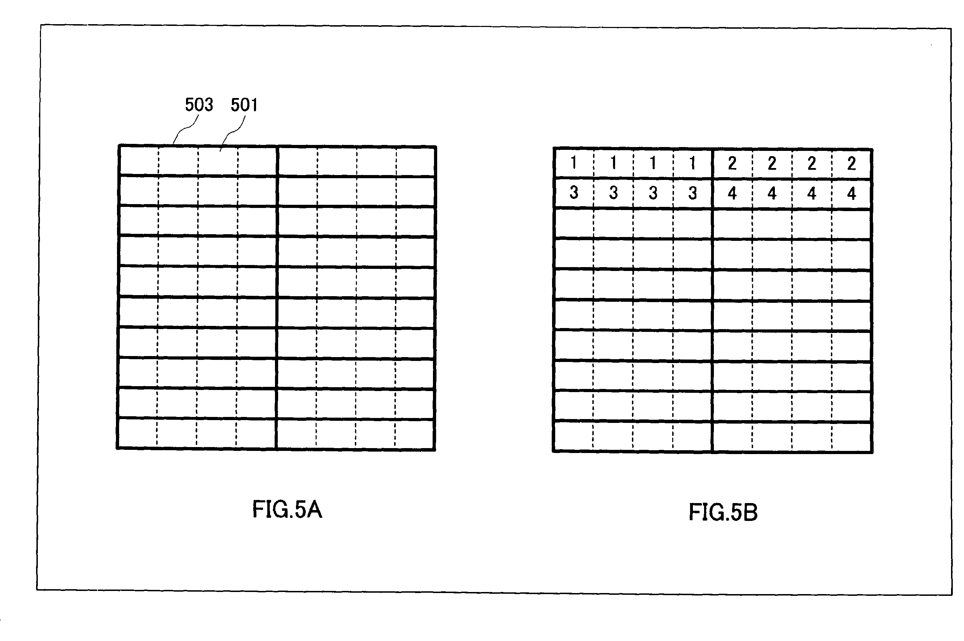

FIG. 5A is a diagram showing an example of input video, and FIG. 5B is a diagram showing an example of the region map calculated in the present working example with respect to the input video of FIG. 5A. The region map of when M= 4 is shown. In FIG. 5A, 501 is amacro-block, and 503 is a small region configured by four macro-blocks continuing in the horizontal direction. As shown in FIG. 5B, the small region number is added for every macro-block.

Therefore, region division is performed so that the size of each region becomes equal to the detection result of the object using the detection result of the object, for example, region division is performed on the video with the size of the face region in the video, so that the region division can be performed without waste in the region unit having high possibility of being clipped as the region of interest thereby preventing lowering of coding efficiency.

Although the face region is subject to detection in the present working example, it is not limited to the face region, and is applicable to person or object, or movement detection and the like.

### (Working example 4)

In working example 4, region map calculating section 118 calculates the region map using the region of interest information output from region of interest receiving section 132. Specifically, for instance, the region of interest (and surrounding region thereof) specified by the receiver (user) is finely divided into small regions, and other regions are coarsely divided into small regions. Further, the vicinity of the region of interest specified in the past by the receiver is finely region divided.

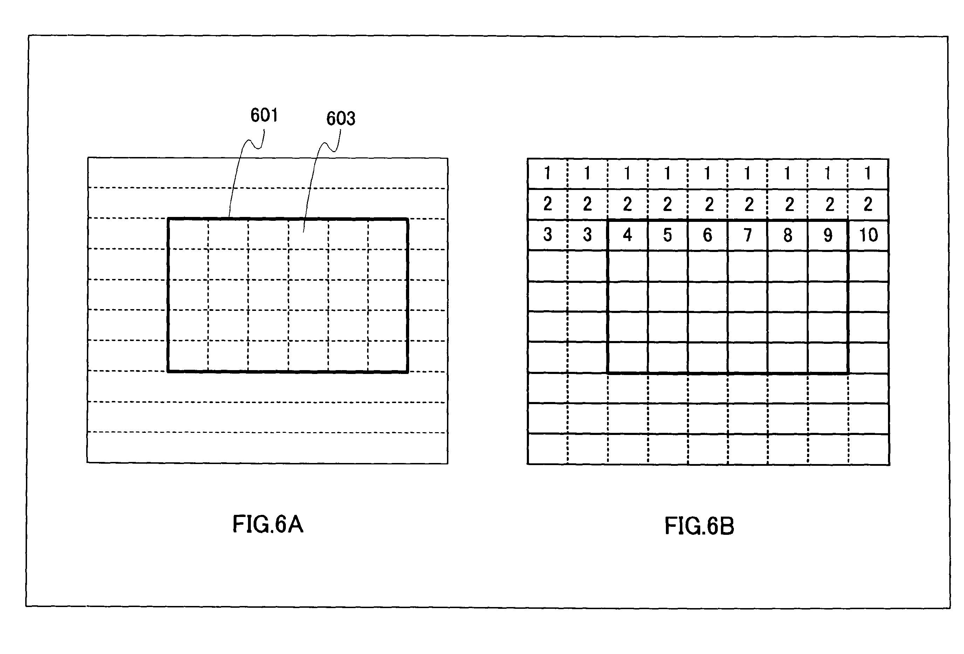

FIG. 6A is a diagram showing an example of input video, and FIG. 6B is a diagram showing an example of the region map calculated in the present working example with respect to the input video of FIG. 6A. In FIG. 6A, 601 is the area of interest and the surrounding region thereof, and 603 is the small region finely divided from the area of interest and the surrounding region. In regions other than the area of interest and the surrounding region thereof 603, regions continuing in the horizontal direction are each a small region. As shown in FIG. 6B, the small region number is added for every macro-block.

Therefore, by finely dividing the region of interest (and the surrounding region thereof) specified by the user, an efficient division can be performed, and further, by finely dividing the nearby region predicted from the past region of interest of the user, the region that is likely to be the region of interest can be efficiently divided, where lowering of coding efficiency caused by unnecessary division is prevented for either case.

Working examples 1 to 4 are mere examples and are by no means limiting. The working examples 1 to 4 may be used alone or in arbitrary combination.

In step S1400, coding processing of the enhancement layer is performed. The enhancement layer coding processing is performed in enhancement layer coding section 120.

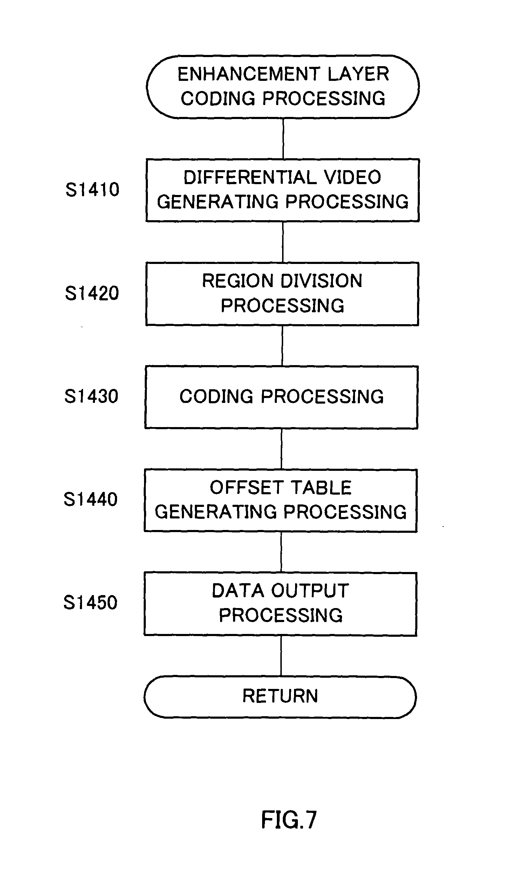

FIG. 7 is a flow chart showing the content of the enhancement layer coding processing shown in FIG. 2.

In step S1410, differential video generating processing for generating the differential video between the input video and the base layer decoded video is performed. Specifically, the decoded video of the base layer output frombase layer coding section 116 is expanded at the reduction ratio M used in video reducing section 114, and the differential process with the input video output from region map calculating section 118 is performed to generate the differential video.

In step S1420, the region division of the differential video is performed. Specifically, the differential video generated in step S1410 is divided according to the region map output from region map calculating section 118.

In step S1430, coding processing is performed for every small region. Specifically, the enhancement layer coding is performed for every small region divided in step S1420. For instance, when the region map shown in FIG. 3B is input, the enhancement layer coding is performed for every small region 303 and macro-block 301. MPEG-4 FGS is used as the enhancement layer coding scheme herein, as mentioned above. Since the MPEG-4 FGS enhancement layer coding scheme is a coding scheme that does not make a prediction from past frames, decoding is possible even if the small regions having a different position in each frame are clipped.

In step S1440, offset table generating processing is performed. Specifically, offset table generating section 122 generates an offset table indicating the position (e.g., storing position in the memory) of the small region coded in step S1430.

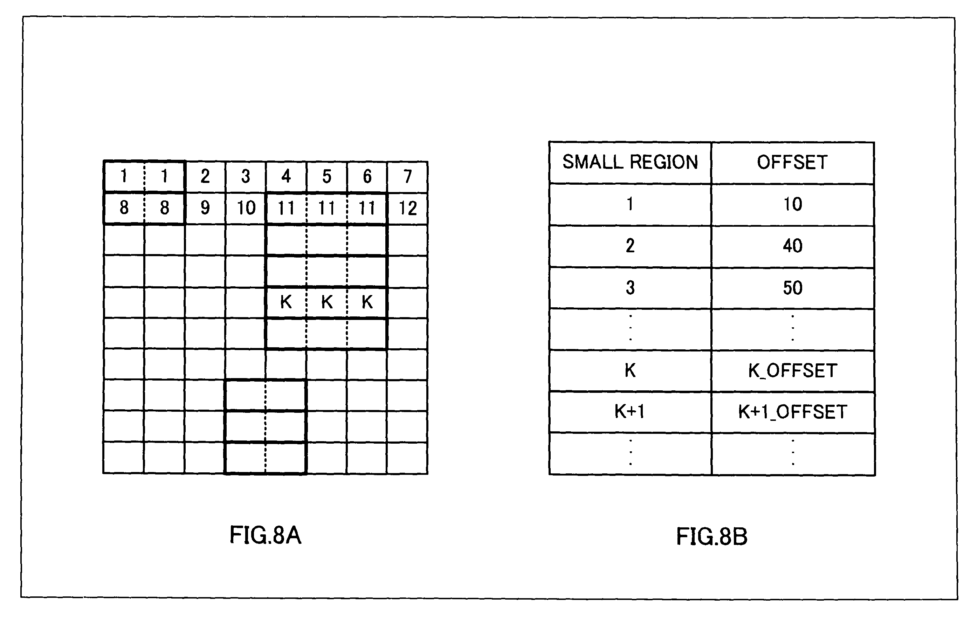

FIG. 8A is a view showing an example of the region map (see FIG. 3B), and FIG. 8B is a diagram showing an example of the offset table corresponding to the region map of FIG. 8A. As shown in FIG. 8A, a small region number is assigned for every macro-block in the region map. The offset table shown in FIG. 8B represents in bytes the offset position from the head of the video stream where the coded data of the small region is stored. That is, the coded data of small region K is up to the (K+1_OFFSET-1) byte with the K_OFFSET byte from the head of the video stream as the starting point.

Since MPEG-4 FGS is used as described above in the present embodiment and MPEG-4 FGS employs bit plane coding, the coded data of the small region is stored divided into a plurality of bit planes. Thus, the offset table is generated for every bit plane.

FIG. 8B is only an example of the offset table, and any format may be used as long as the storing position of video data for every divided region is indicated.

In step S1450, data output processing is performed. Specifically, after the coded video stream generated in step S1430 and the offset table generated in step S1440 are output to video data clipping section 136, the process returns to the flow chart of FIG. 2.

In step S1500, termination determining processing is performed. Specifically, a series of processes are terminated when a predetermined number of frames are coded, or when video input is terminated, and the process returns to step S1000 when the above terminating conditions are not met, that is, when the predetermined number of frames are not coded or the video input is not terminated.

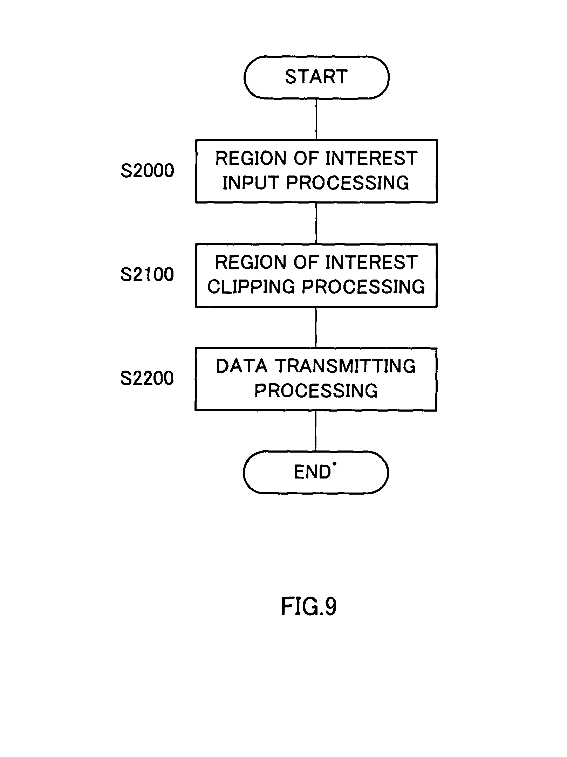

The operation of video transmitting apparatus 100 having the above configuration -- in particular, the operation of video delivering section 130 -- will now be explained using the flow chart shown in FIG. 9. The flow chart shown in FIG. 9 is stored in a storage apparatus (e.g., ROM, flash memory, etc.) (not shown) of video transmitting apparatus 100 as control program and executed by a CPU (not shown). Video delivering section 130 has a function of clipping and transmitting the corresponding portion from the video data of the enhancement layer with respect to the region of interest specified by the user.

In step S2000, region of interest input processing for inputting the region of interest information is performed. Specifically, region of interest receiving section 132 receives region of interest information transmitted by the user, and outputs the same to video data clipping section 136 and region map calculating section 118. If the region of interest information is not received after waiting a predetermined time, "region of interest OFF" information indicating that the region of interest information has not been received is output. The region of interest information output to region map calculating section 118 is used for the calculation of the region map as described above (see working example 4) .

In step S2100, region of interest clipping processing for clipping the enhancement layer video data corresponding to the region of interest is performed. Specifically, video data clipping section 136 clips the video data of the enhancement layer using the enhancement layer video data and the offset table output from enhancement layer coding section 120, the region map output from region map calculating section 118, as well as the region of interest information output from region of interest receiving section 132. More specifically, the small region including the region of interest is calculated by comparing the region map and the region of interest information. The storing position of the video data corresponding to the small region including the region of interest is calculated using the offset table, and the video data is clipped from the video data of the enhancement layer. The clipped video data is output to enhancement layer transmitting section 138. When "region of interest OFF" information is input from region of interest receiving section 132, the video data is not clipped, and the video data of the enhancement layer is output as it is to enhancement layer transmitting section 138.

In step S2200, data transmitting processing is performed. Specifically, base layer transmitting section 134 transmits the video data output from base layer coding section 116 to video receiving apparatus 150 via network 190. Enhancement layer transmitting section 138 transmits the video data output from video data clipping section 136 to video receiving apparatus 150 via network 190. Region map transmitting section 140 transmits the region map output from region map calculating section 118 to video receiving apparatus 150 via network 190.

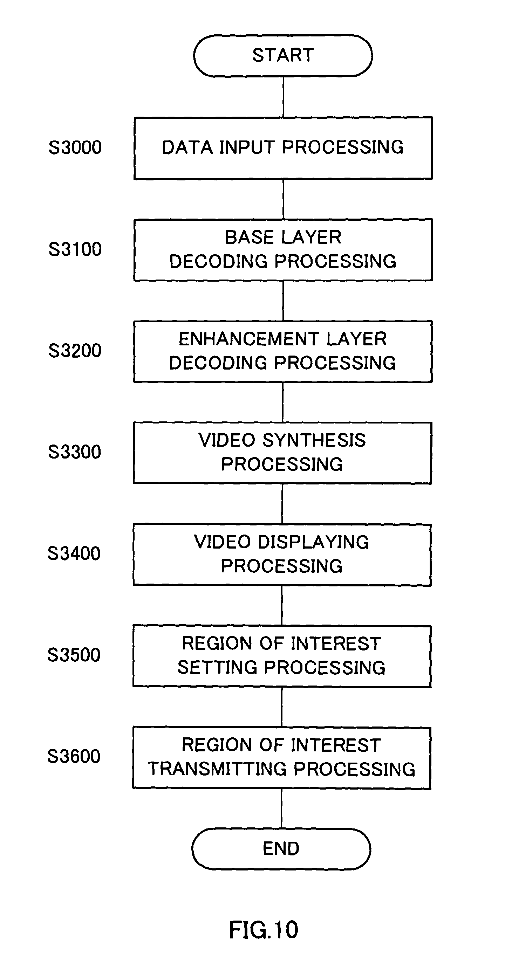

The operation of video receiving apparatus 150 having the above configuration will now be explained using the flow chart shown in FIG. 10. The flow chart shown in FIG. 10 is stored in a storage apparatus (e.g., ROM, flash memory, etc.) (not shown) of video receiving apparatus 150 as control program, and executed by a CPU (not shown).

In step S3000, data input processing is performed. Specifically, base layer receiving section 152 receives video data of the base layer via network 190, and outputs the same to base layer decoding section 154. Enhancement layer receiving section 156 receives video data of the enhancement layer via network 190, and outputs the same to enhancement layer decoding section 158. Further, region map receiving section 160 receives the region map via network 190, and outputs the same to video synthesis section 162.

In step S3100, base layer decoding processing is performed. Specifically, base layer decoding section 154 decodes the video data of base layer output from base layer receiving section 152, and outputs the obtained decoded video to enhancement layer decoding section 158 and video synthesis section 162.

In step S3200, enhancement layer decoding processing is performed. Specifically, enhancement layer decoding section 158 decodes the video data of the enhancement layer output from enhancement layer receiving section 156, performs adding processing with the video obtained by expanding the decoded video of the base layer output frombase layer decoding section 154 at an expansion ratio defined in advance, and generates the decoded video. The decoded video of the region where the enhancement layer is present is clipped from the obtained decoded video, and the decoded video data that is clipped is output to video synthesis section 162.

In step S3300, video synthesis processing is performed. Specifically, video synthesis section 162 synthesizes the decoded video of the base layer output from base layer decoding section 154, the decoded video of the enhancement layer output from enhancement layer decoding section 158 and the region map output from region map receiving section 160, and outputs the result to video display section 164. More specifically, the small region shown with the region map is simultaneously displayed on the base layer decoded video, and synthesized as a sub-screen in the enhancement layer decoded video.

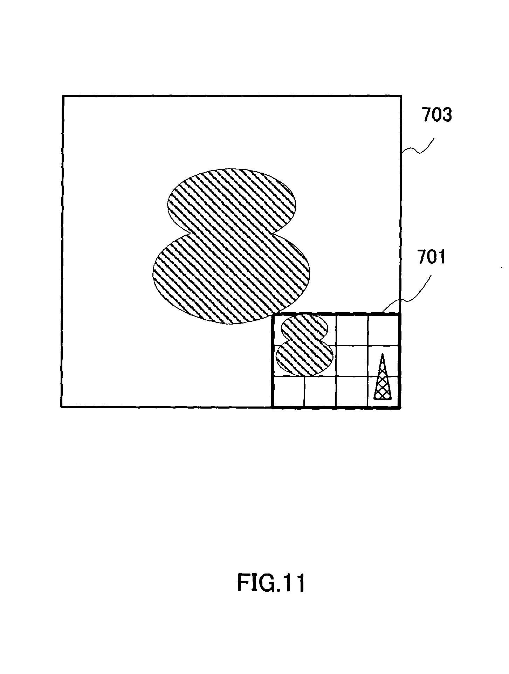

FIG. 11 is a diagram showing an example of the video synthesis result in which the sub-screen is synthesized with the enhancement layer decoded video. In FIG. 11, 701 is the sub-screen in which the small region shown with the region map is displayed with lines on the base layer decoded video expressing the entire view, and 703 is the enhancement layer decoded video.

Therefore, by simultaneously displaying the entire image of the video and the region map on the screen, selection of the region of interest can be performed using the same, whereby the user is able to visually understand the relative relationship between the region of interest and the entire view, thereby enhancing the operability of the selection of the region of interest by the user.

In the present embodiment, a case of synthesizing video of entire view and the enhancement layer video in one screen is illustrated, but is not limited thereto, and may be separately displayed on two display screens, and any method may be used as long as it is a method that displays the entire view in addition to the enhancement layer thereby enhancing the operability of the selection of the region of interest.

In step S3400, video displaying processing is performed. Specifically, video display section 164 displays the synthesized video output from video synthesis section 162 (see FIG. 11) on the display device.

In step S3500, region of interest setting processing is performed. Specifically, region of interest setting section 166 calculates region of interest information (x, y), (w, h) when the user selects the region of interest while looking at the sub-screen displayed on the display device, and outputs the calculated information to region of interest transmitting section 168. When the region of interest desired by the user cannot be clipped depending on the small region displayed on a sub-screen, the region map showing the small region is calculated and added to the region of interest information and output to region of interest transmitting section 168. By this means, the user is able to select the region of interest and also changes the region of interest.

In step S3600, region of interest information transmitting processing is performed. Specifically, region of interest transmitting section 168 transmits the region of interest information output from region of interest setting section 166 to video transmitting apparatus 100 via network 190.

Therefore, according to the present embodiment, the base layer (reduced video) is video of low resolution and such low resolution video is base layer coded, whereby the processing load in decoding becomes small and decoding is carried out with little delay. Further, since coding is performed for every divided region after the region map is calculated and the enhancement layer (differential video) is divided according to the region map, the overhead is reduced. Since the storing position of the video data of the enhancement layer for every divided region is described in the offset table, and the video data of the enhancement layer is clipped using the offset table, the video data corresponding to the region of interest can be accessed at high speed, and the video data can be clipped at high speed. Moreover, since intra-frame coding that does not require past frames in decoding is performed with respect to the enhancement layer, the region of interest can be changed during reproduction of video. Therefore, only the video data of the region of interest is efficiently transmitted and decoded without involving lowering of coding efficiency and the region of interest may be changed during reproduction of video.

### (Second embodiment)

A case will be described with the present embodiment where a transmitting terminal transmits the decode map necessary for decoding the enhancement layer and a receiving terminal omits part of decoding processing of the base layer in accordance with this decode map.

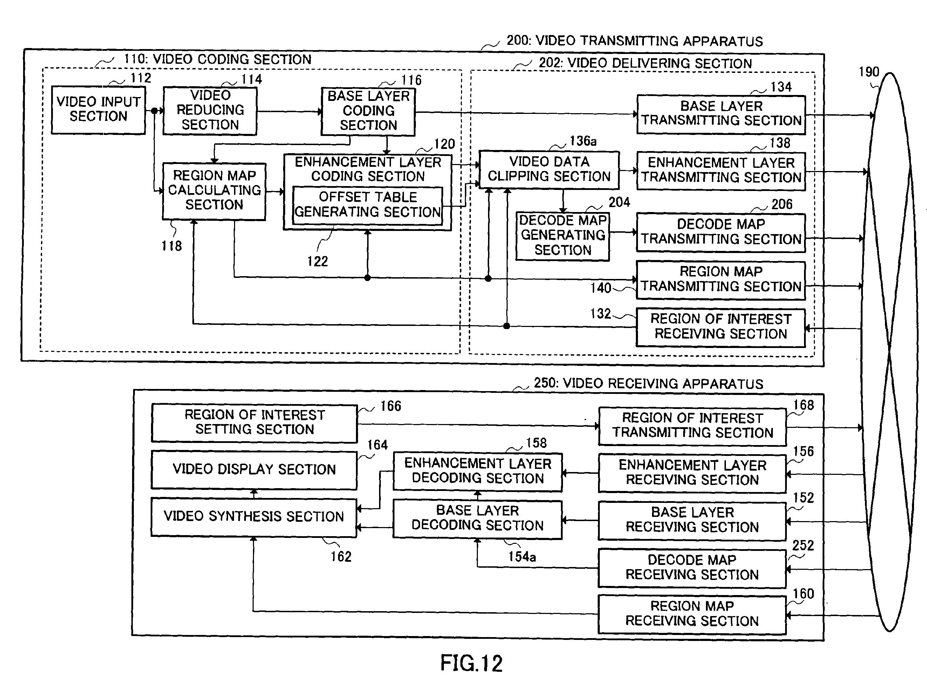

FIG. 12 is a diagram showing a configuration of a video transmitting system including a video transmitting apparatus and a video receiving apparatus according to a second embodiment of the present invention. The video transmitting system has a basic configuration similar to the video transmitting system show in FIG. 1, and the same reference numerals are denoted for the same components and thus the explanation thereof will be omitted.

The feature of the present embodiment lies in that the transmitting terminal transmits the decode map and the receiving terminal omits apart of decoding processing of the base layer according to the decode map. Thus, video transmitting apparatus 200 (particularly, video delivering section 202) includes a decode map generating section 204 and a decode map transmitting section 206. Further, video receiving apparatus 250 includes a decode map receiving section 252.

Video data clipping section 136a, similar to video data clipping section 136 in the first embodiment, extracts (cuts out) the video data corresponding to the region of interest output from region of interest receiving section 132 from the video data output from enhancement layer coding section 120 using the region map output from region map calculating section 118 and the offset table output from enhancement layer coding section 120, and outputs the extracted video data to enhancement layer transmitting section 138. In addition, video data clipping section 136a outputs the number of the clipped small region and the region map to the decode map generating section 204.

The decode map generating section 204 generates the decode map using the small region number and the region map output from video data clipping section 136a and outputs the same to decode map transmitting section 206.

Decode map transmitting section 206 transmits the decode map output from the decode map generating section 204 to video receiving apparatus 250 via network 190.

Decode map receiving section 252 receives the decode map from network 190 and outputs the same to base layer decoding section 154a.

Base layer decoding section 154a performs decoding processing on the video data of the base layer output from base layer receiving section 152 using the decode map output from decode map receiving section 252, and outputs the obtained decoded video to enhancement layer decoding section 158 and video synthesis section 162.

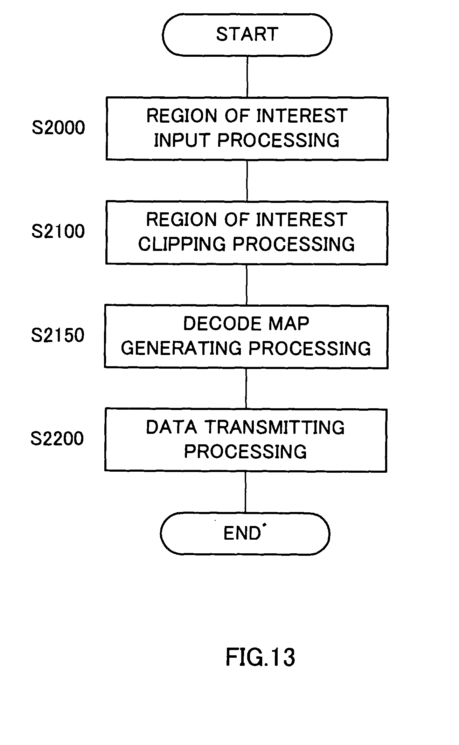

The operation of video transmitting apparatus 200 having the above configuration -- in particular, the operation of video delivering section 202 -- will now be explained using the flow chart shown in FIG. 13. The flow chart shown in FIG. 13 is stored in a storage apparatus (e.g., ROM, flash memory, etc.) (not shown) of video transmitting apparatus 200 as control program, and executed by a CPU (not shown).

In the present embodiment, step S2150 is inserted in the flow chart shown in FIG. 9, as shown in FIG. 13.

Step S2000 and step S2100 are similar to the respective steps of the flow chart shown in FIG. 9, and thus the explanation thereof will be omitted. However, in the present embodiment, the received region of interest information is output to video data clipping section 136a and region map calculating section 118 in step S2000. Further, in step S2100, the numbers for the clipped small region and the region map are output to the decode map generating section 204 in addition to the processing in the first embodiment.

In step S2150, decode map generating processing is performed. Specifically, a decode map is generated using the small region number and region map output from video data clipping section 136a, and output to decode map transmitting section 206. The decode map includes the small region of the region map corresponding to the small region number output from video data clipping section 136a.

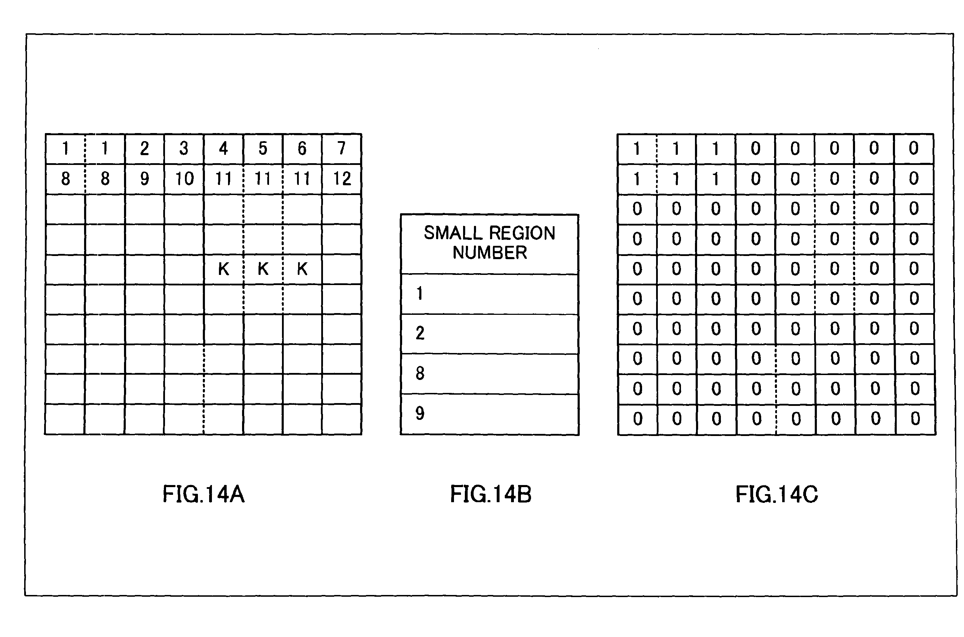

FIG. 14A is a diagram showing an example of the region map (see FIG. 3B), FIG. 14B is a diagram showing the numbers of the clipped small regions, and FIG . 14C is a diagram showing an example of the decode map corresponding to FIG. 14B. In FIG. 14C, the macro-block corresponding to the clipped small region numbers (1, 2, 8, 9) is "1", and the others are "0." The decoded video of the same region in the base layer is necessary in decoding the enhancement layer. Therefore, the region shown with "1" in the decode map is a region that includes the enhancement layer, and thus is a region that requires decoding processing in the base layer. That is, in the decode map of FIG. 14C, the region of "1" indicates the region that requires decoding and the region of "0" indicates the region that does not require decoding.

The decode map is not limited to the format of FIG. 14C, and any scheme may be used as long it is scheme that can express the region.

Although the decode map is transmitted as different data separate from the video stream in the present embodiment, it is not limited thereto, and may be described in the user region in the base layer. Thus, transmitting processing of the different data becomes unnecessary, and decoding at the standard base layer becomes possible.

Step S2200 is similar to the step of the flow chart shown in FIG. 9, and thus the explanation thereof will be omitted. However, in addition to the transmitting processing in the first embodiment, decode map transmitting section 206 transmits the decode map output from the decode map generating section 204 to video receiving apparatus 250 via network 190 in the present embodiment.

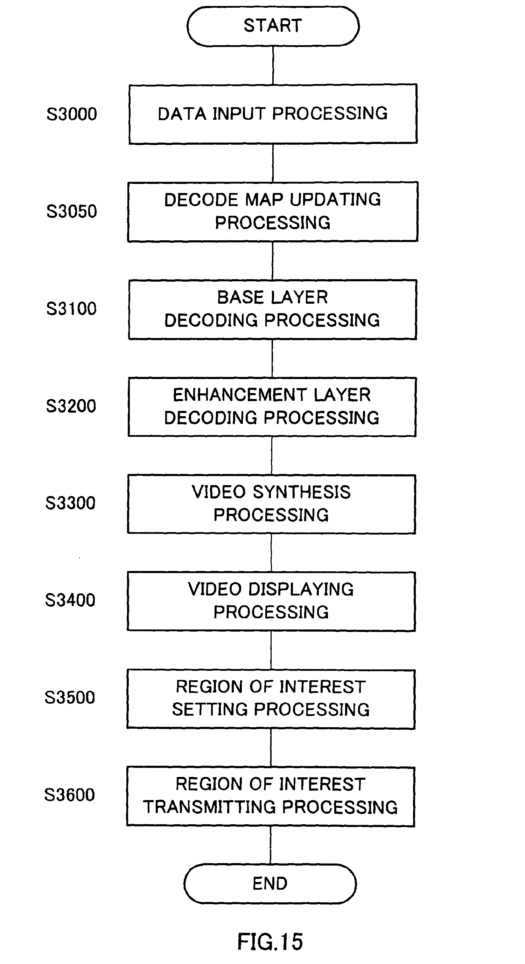

The operation of video receiving apparatus 250 having the above configuration will now be explained using the flow chart shown in FIG. 15. The flow chart shown in FIG. 15 is stored in a storage apparatus (e.g., ROM, flash memory, etc.) (not shown) of video receiving apparatus 250 as control program, and executed by a CPU (not shown).

In the present embodiment, step S3050 is inserted in the flow chart shown in FIG. 10, as shown in FIG. 15.

Step S3000 is the same as the step of the flow chart shown in FIG. 10 and thus the explanation thereof will be omitted.

Decode map updating processing is performed in step S3050. Specifically, decode map receiving section 252 receives the decode map via network 190 and outputs the same to base layer decoding section 154a. Base layer decoding section 154a extends the region of "1" of the decode map in the direction of the motion vector of the base layer using the motion vector decoded in the base layer decoding processing of the past frame.

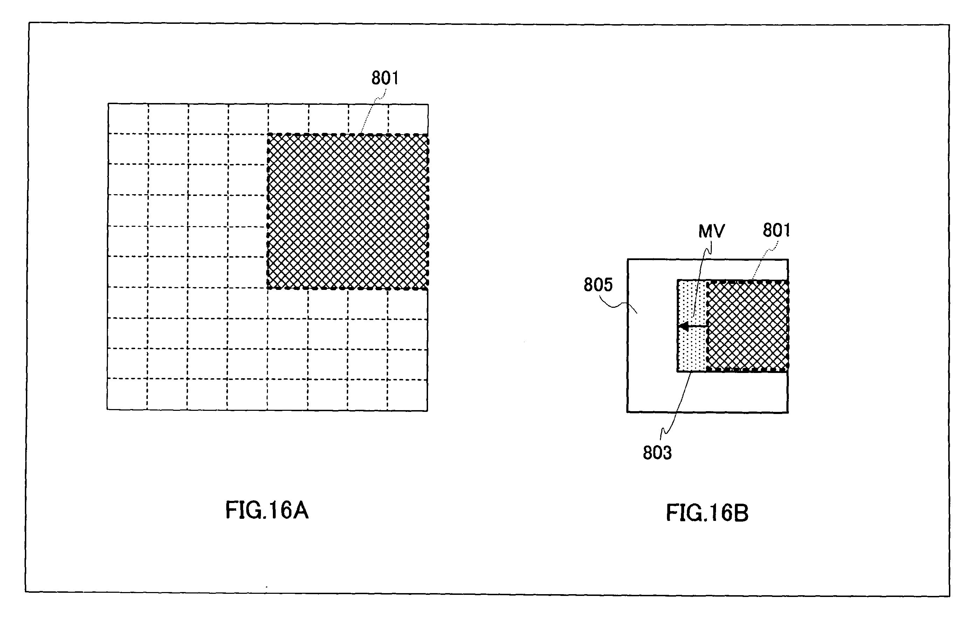

FIG. 16A is a diagram showing an example of the received decode map, and FIG. 16B is a diagram showing an example of the expanded decode map. In FIG. 16A and FIG. 16B, 801 is the region to be decoded (region of "1") in the received decode map. In FIG. 16B, 803 is the region to be decoded in the expanded decode map, 805 is the base layer, and MV is the motion vector. As shown in FIG. 16B, the region to be decoded is expanded in the direction of the motion vector.

Therefore, by expanding the decode map in accordance with the movement of the object, the movement of the region of interest for each frame can be countered, and lack of data of the base layer involved in the movement of the region of interest can be prevented.

Step S3100 to step S3600 are similar to the respective steps in the flow chart shown in FIG. 10, and thus the explanation thereof will be omitted. However, decoding processing of the base layer is performed using the decode map in step S3100 in the present embodiment. Specifically, base layer decoding section 154a decodes only the region shown in the decode map with respect to the video data of base layer output from base layer receiving section 152, and outputs the obtained decoded video to enhancement layer decoding section 158 and video synthesis section 162. Thus, decoding processing of regions not shown in the decode map is omitted, and less delay involved in the reduction of decoding processing is achieved.

According to the present embodiment, since the decode map of the base layer necessary for decoding the enhancement layer is transmitted and only the region shown in the decode map is base layer decoded, a part of the decoding processing of the base layer can be omitted and the processing can be alleviated. Higher speed becomes possible as a result.

According to the present embodiment, since the decode map is expanded in the direction of the motion vector to perform base layer decoding, increase in the base layer data involved in the movement of the region of interest can be countered, and lack of base layer (i.e., loss of reference image) can be prevented. The region of interest can be changed as a result.

In summary, the present invention has the advantages described below.

(1) The video transmitting apparatus of the present invention is a video transmitting apparatus for layered-coding and transmitting input video as a video stream of a base layer and an enhancement layer, where this video transmitting apparatus has a first coding section that codes the base layer; a calculating section that calculates divided regions in coding the enhancement layer; and a second coding section that performs intra-frame coding on the enhancement layer for each calculated divided region.

According to this configuration, since the base layer is coded, divided regions in coding the enhancement layer is calculated, and the enhancement layer is intra-frame coded for each divided region, only the video data of the region of interest is efficiently transmitted and decoded, and the region of interest can be changed during reproduction of video without lowering coding efficiency. That is, since the base layer is video of low resolution, the load of decoding processing is made small, and decoding is performed at little delay. Further, since the divided region in coding the enhancement layer is calculated, and coding of the enhancement layer is performed for each calculated divided region, the over head can be reduced. Moreover, since intra-frame coding is performed on the enhancement layer, the past frame becomes unnecessary during decoding and region of interest can be changed during reproduction of video.

(2) The video transmitting apparatus of the present invention adopts, in the above configuration, a configuration further including: a first generating section that generates information related to the storing position of the coded enhancement layer for each calculated divided region; and an extracting section that extracts the video data of the region of interest from the coded enhancement layer using the generated storing position information.

According to this configuration, since the information related to the storing position of each calculated divided region of the coded enhancement layer is generated and the video data of the region of interest is extracted from the coded enhancement layer using the generated storing position information, the video data corresponding to the region of interest can be accessed at high speed and the video data can be clipped at high speed. Thus, only the video data of the region of interest can be more efficiently transmitted and decoded.

(3) The video transmitting apparatus of the present invention adopts, in the above configuration, a configuration in which the calculating section calculates divided regions so that regions having the same or similar motion vectors are the same region.

According to this configuration, since the calculation of divided regions is performed such that regions having the same or similar motion vectors are the same region, a moving object having a high possibility of becoming the region of interest can be divided as the same region, and lowering of coding efficiency caused by unnecessary divisions is prevented.

(4) The video transmitting apparatus of the present invention adopts, in the above configuration, a configuration in which the calculating section calculates divided regions so that a specific region in video is divided into fine regions.

According to this configuration, since the calculation of divided regions is performed so as to divide a specific region in video into fine regions, for example, divide a predetermined area such as an important area (e.g., near the door or near the cash register of a shop) in the monitoring region into fine regions and divide the rest coarsely in remote monitoring using video, lowering of coding efficiency caused by unnecessary divisions is prevented without losing selectivity of regions in the area (important monitoring region) that is likely to be the region of interest.

(5) The video transmitting apparatus of the present invention adopts, in the above configuration, a configuration in which the calculating section calculates divided regions so that the size of each region becomes equal to a detection result of an object.

According to this configuration, since the calculation of divided regions is performed so that the size of each region becomes equal to a detection result of an object. For instance, division of the entire screen is performed with the size of a person of an identification result as a section using image recognition of the person, that is, video is region divided with the size of the person in video, the region division is performed without waste at a region unit having a high possibility of being clipped as the region of interest, and lowering of coding efficiency is prevented.

(6) The video transmitting apparatus of the present invention adopts, in the above configuration, a configuration in which the calculating section calculates divided regions so that a central part of a screen is divided into fine regions.

According to this configuration, since divided regions are calculated so that the central part of the screen is divided into fine regions, lowering of coding efficiency caused by unnecessary divisions is prevented without losing selectivity of regions in the area where an object is likely to be imaged, for example, near the center of video.

(7) The video transmitting apparatus of the present invention adopts, in the above configuration, a configuration further including an acquiring section that acquires information related to region of interest, wherein the calculating section calculates divided regions using the acquired region of interest information.

According to this configuration, since the information related to the region of interest is acquired and the calculation of divided regions is performed using the acquired region of interest information -- for instance, the region division is performed using the region of interest specified by the receiver (user), and the vicinity of the region of interest that has been specified in the past by the receiver is finely region divided -- lowering of coding efficiency is prevented. For instance, when dividing the region specified by the user, division without waste is performed, and the region having a high possibility of becoming the region of interest is efficiently divided when finely dividing the vicinity region predicted from the past region of interest, where lowering of coding efficiency caused by unnecessary division is prevented in either case.

(8) The video transmitting apparatus of the present invention adopts, in the above configuration, a configuration of further including a first transmitting section that transmits the information related to the calculated divided region.

According to this configuration, since the divided region information is transmitted, the video receiving apparatus receives the divided region information, synthesizes the received divided region information with the decoded base layer, and displays the synthesis result, so that the user can visually check the positional relationship of the region of interest, thereby enhancing the operability of selection of the region of interest.

(9) The video transmitting apparatus of the present invention adopts, in the above configuration, a configuration further including a second generating section that generates decoding region information indicating the region that requires decoding to decode the coded enhancement layer in the coded base layer, and a second transmitting section that transmits the generated decoding region information.

According to this configuration, since the decoding region information indicating the region that requires decoding to decode the coded enhancement layer in the coded base layer is generated and transmitted, the video receiving apparatus decodes only the video data indicated in the decoding region information, that is, omits a part of decoding processing, thereby reducing the amount of decoding processing, and achieving less delay (higher speed).

(10) The video transmitting apparatus of the present invention adopts, in the above configuration, a configuration in which the second transmitting section stores the generated decoding region information in the user region of the coded base layer and performs transmission.

According to this configuration, since the decoding region information is stored in the user region of the coded base layer and then transmitted, that is, the decoding region information is stored in the user region where description of unique information is possible and the codedbase layer is transmitted, decoding becomes possible by a standard coding section, and further, transmitting processing of auxiliary information necessary for reducing the first decoding processing amount becomes unnecessary.

(11) The video receiving apparatus of the present invention is a video receiving apparatus for receiving a video stream transmitted from the video transmitting apparatus of (1) and adopts a configuration including a first receiving section that receives a codedbase layer, a first decoding section that decodes the received coded base layer, a second receiving section that receives the coded enhancement layer, a second decoding section that decodes the received coded enhancement layer, a first synthesis section that synthesizes the decoded base layer and the decoded enhancement layer, and a display section that displays the synthesis result of the first synthesis section.

According to this configuration, since the coded base layer is received and decoded, the coded enhancement layer is received and decoded, the decoded base layer and the decoded enhancement layer are synthesized, and the synthesis result is displayed, only the video data of the region of interest is efficiently transmitted and decoded and the region of interest can be changed during reproduction of video without lowering coding efficiency in cooperation with the corresponding video transmitting apparatus.

(12) The video receiving apparatus of the present invention is a video receiving apparatus for receiving a video stream transmitted from the video transmitting apparatus of (8) in the above configuration and adopts a configuration including a third receiving section that receives the transmitted divided region information, a second synthesis section that synthesizes the received divided region information with the decoded base layer, and a setting section that sets the region of interest through specification of the user, the display section that displays the synthesis result of the second synthesis section on the same screen or on a separate screen with the synthesis result of the first synthesis section.

According to this configuration, since the setting section that sets the region of interest through the specification of the user is provided, the divided region information is received and synthesized with the decoded base layer, and the synthesis result is displayed on the same screen or on a separate screen with the synthesis result of the decoded base layer and the decoded enhancement layer, the user is able to visually check the positional relationship of the region of interest, thereby enhancing the operability of selection of the region of interest.

(13) The video receiving apparatus of the present invention adopts, in the above configuration, a configuration further including a specifying section that specifies the divided region in coding the enhancement layer, and a third transmitting section that transmits the specified result of the specifying section.

According to this configuration, since the divided region in coding the enhancement layer is specified and transmitted -- that is, the user specifies the divided region -- region division without waste becomes possible and lowering of coding efficiency is prevented.

(14) The video receiving apparatus of the present invention adopts, in the above configuration, a configuration further including a receiving section that receives the decoding region information , where the first decoding section performs decoding processing using the received decoding region information.

According to this configuration, since the decoding region information is received, and decoding processing of the coded base layer is performed using the received decoding region information, that is, only the video data necessary for decoding the coded enhancement layer is decoded, part of decoding processing is omitted, whereby the amount of decoding processing is reduced and less delay (higher speed) is achieved.

(15) The video receiving apparatus of the present invention adopts, in the above configuration, a configuration in which the first decoding section expands the region included in the received decoding region information in the direction of the motion vector, and performs decoding processing using the decoding region information of after expansion.

According to this configuration, since the region included in the received decoding region information is expanded in the direction of the motion vector, and decoding processing of the coded base layer is performed using the decoding region information after expansion -- that is, the decoding processing region with respect to the coded base layer is expanded in accordance with the movement of the object in video -- the video data of the base layer required when changing the region of interest can be decoded in advance (prevent loss of reference image), and the region of interest can be changed during reproduction of video while reducing the amount of decoding processing.

The present specification is based on Japanese Patent Application No.2003-374559, filed on November 4, 2003, the entire content of which is expressly incorporated herein by reference.

### Industrial Applicability

The video transmitting system according to the present invention including a video transmitting apparatus and video receiving apparatus is capable of clipping, transmitting and decoding only the video data of the region of interest in high resolution video without lowering coding efficiency, transmitting the video data of the region of interest at a small transmission band, decoding at low processing, and changing the region of interest during reproduction of video, and thus is suitable for use in decoding the video data of the region of interest at low process in a situation where transmission band or processing ability are limited.

## Claims

1. A video transmitting apparatus for layered-coding and transmitting input video as a video stream of a base layer and enhancement layer, the video transmitting apparatus comprising:
a first coding section that codes the base layer;
a calculating section that calculates divided regions in coding the enhancement layer; and
a second coding section that performs intra-frame coding on the enhancement layer for each calculated divided region.

2. The video transmitting apparatus according to claim 1, further comprising:
a first generating section that generates information related to a storing position of the coded enhancement layer for each calculated divided region; and
an extracting section that extracts video data of a region of interest from the coded enhancement layer using the generated storing position information.

3. The video transmitting apparatus according to claim 1, wherein the calculating section calculates divided regions so that regions having same or similar motion vectors are the same region.

4. The video transmitting apparatus according to claim 1, wherein the calculating section calculates divided regions so that a specific region in video is divided into small regions.

5. The video transmitting apparatus according to claim 1, wherein the calculating section calculates divided regions so that a size of each region becomes equal to a detection result of an object.

6. The video transmitting apparatus according to claim 1, wherein the calculating section calculates divided regions so that a central part of a screen is divided into small regions.

7. The video transmitting apparatus according to claim 1, further comprising an acquiring section that acquires information related to a region of interest,
wherein the calculating section calculates divided regions using the acquired information relate to the region of interest.

8. The video transmitting apparatus according to claim 1, further comprising a first transmitting section that transmits information related to the calculated divided regions.

9. The video transmitting apparatus according to claim 1, further comprising:
a second generating section that generates decoding region information indicating a region that requires decoding to decode the coded enhancement layer in the coded base layer; and
a second transmitting section that transmits the generated decoding region information.

10. The video transmitting apparatus according to claim 9, wherein the second transmitting section stores the generated decoding region information in a user region of the coded base layer and performs transmission.

11. A video receiving apparatus for receiving a video stream transmitted from the video transmitting apparatus according to claim 1, the video receiving apparatus comprising:
a first receiving section that receives a coded base layer;
a first decoding section that decodes the received coded base layer;
a second receiving section that receives a coded enhancement layer;
a second decoding section that decodes the received coded enhancement layer;
a first synthesis section that synthesizes the decoded base layer and the decoded enhancement layer; and
a display section that displays the synthesis result of the first synthesis section.

12. The video receiving apparatus according to claim 11, for receiving a video stream transmitted from the video transmitting apparatus according to claim 8, the video receiving apparatus comprising:
a third receiving section that receives transmitted divided region information;
a second synthesis section that synthesizes the received divided region information with a decoded base layer; and
a setting section that sets a region of interest by a specification by a user,
wherein the display section displays a synthesis result of the second synthesis section on a same screen or on a separate screen with the synthesis result of the first synthesis section.

13. The video receiving apparatus according to claim 11, further comprising:
a specifying section that specifies divided regions in coding the enhancement layer; and
a third transmitting section that transmits a specifying result of the specifying section.

14. The video receiving apparatus according to claim 11, further comprising a receiving section that receives the decoding region information,
wherein the first decoding section performs decoding processing using the received decoding region information.

15. The video receiving apparatus according to claim 14, wherein the first decoding section expands a region included in the received decoding region information in a direction of a motion vector, and performs decoding processing using the expanded decoding region information.

16. A video transmitting method of layered-coding and transmitting input video as a video stream of a base layer and an enhancement layer, the method comprising:
a first coding step of coding the base layer;
a calculating step of calculating divided regions in coding the enhancement layer; and
a second coding step of intra-frame coding the enhancement layer for each divided region calculated in the calculating step.

17. A video receiving method for receiving a video stream transmitted using the video transmitting method according to claim 16, the video receiving method comprising:
a first receiving step of receiving the coded base layer;
a first decoding step of decoding the coded base layer received in the first receiving step;
a second receiving step of receiving the coded enhancement layer;
a second decoding step of decoding the coded enhancement layer received in the second receiving step;
a synthesis step of synthesizing the base layer decoded in the first decoding step and the enhancement layer decoded in the second decoding step; and
a displaying step of displaying a synthesis result in the synthesis step.

## Amended claims

### Amended claims under Art. 19.1 PCT

1. (Amended) A video transmitting apparatus for layered-coding and transmitting input video as a video stream of a base layer and an enhancement layer, the video transmitting apparatus comprising:
a first coding section that codes the base layer;
a calculating section that calculates divided regions in coding the enhancement layer;
a second coding section that performs intra-frame coding on the enhancement layer for each calculated divided region; and
a first generating section that generates information related to a storing position of the coded enhancement layer for each calculated divided region in the video stream.

2. (Amended) The video transmitting apparatus according to claim 1, further comprising an extracting section that extracts video data of a specific region from the coded enhancement layer using the generated storing position information.

3. (Amended) The video transmitting apparatus according to claim 1, wherein the calculating section calculates divided regions where regions having same or similar motion vectors are the same region in the enhancement layer.

4. The video transmitting apparatus according to claim 1, wherein the calculating section calculates divided regions so that a specific region in video is divided into small regions.

5. (Amended) The video transmitting apparatus according to claim 1, wherein the calculating section calculates divided regions so that a size of each region becomes equal to a detection result of a specific object.

6. The video transmitting apparatus according to claim 1, wherein the calculating section calculates divided regions so that a central part of a screen is divided into fine regions.

7. (Amended) The video transmitting apparatus according to claim 1, further comprising an acquiring section that acquires information related to a specific region,
wherein the calculating section calculates divided regions using the acquired specific region information.

8. The video transmitting apparatus according to claim 1, further comprising a first transmitting section that transmits information related to the calculated divided regions.

9. The video transmitting apparatus according to claim 1 further comprising:
a second generating section that generates decoding region information indicating a region that requires decoding to decode the coded enhancement layer in the coded base layer; and
a second transmitting section that transmits the generated decoding region information.

10. (Amended) The video transmitting apparatus according to claim 9, wherein the second transmitting section stores the generated decoding region information in a video stream of the coded base layer and performs transmission.

11. A video receiving apparatus for receiving a video stream transmitted from the video transmitting apparatus according to claim 1, the video receiving apparatus comprising:
a first receiving section that receives a coded base layer;
a first decoding section that decodes the received coded base layer;
a second receiving section that receives a coded enhancement layer;
a second decoding section that decodes the received coded enhancement layer;
a first synthesis section that synthesizes the decoded base layer and the decoded enhancement layer; and
a display section that displays the synthesis result of the first synthesis section.

12. (Amended) The video receiving apparatus according to claim 8, for receiving a video stream transmitted from the video transmitting apparatus according to claim 8, the video receiving apparatus comprising:
a third receiving section that receives transmitted divided region information;
a second synthesis section that synthesizes the received divided region information with a decoded base layer; and
a setting section that sets a region of interest by a specification by a user,
wherein the display section displays a synthesis result of the second synthesis section on a same screen or on a separate screen with the synthesis result of the first synthesis section.

13. The video receiving apparatus according to claim 11, further comprising:
a specifying section that specifies divided regions in coding the enhancement layer; and
a third transmitting section that transmits a specifying result of the specifying section.

14. The video receiving apparatus according to claim 11, further comprising a receiving section that receives the decoding region information,
wherein the first decoding section performs decoding processing using the received decoding region information.

15. The video receiving apparatus according to claim 14, wherein the first decoding section expands a region included in the received decoding region information in a direction of a motion vector, and performs decoding processing using the expanded decoding region information.

16. (Amended) A video transmitting method of layered-coding and transmitting input video as a video stream of a base layer and an enhancement layer, the method comprising:
a first coding step of coding the base layer;
a calculating step of calculating divided regions in coding the enhancement layer; and
a second coding step of intra-frame coding the enhancement layer for each divided region calculated in the calculating step; and
a first generating step for generating information related to storing position in the video stream for each divided region calculated in the calculating step of the enhancement layer coded in the second coding step.

17. A video receiving method for receiving a video stream transmitted using the video transmitting method according to claim 16, the method comprising:
a first receiving step of receiving a coded base layer;
a first decoding step of decoding the coded base layer received in the first receiving step;
a second receiving step of receiving a coded enhancement layer;
a second decoding step of decoding the coded enhancement layer received in the second receiving step;
a synthesis step of synthesizing the base layer decoded in the first decoding step and the enhancement layer decoded in the second decoding step; and
a displaying step of displaying a synthesis result in the synthesis step.
